# FASCICULE DE BREVET EUROPEEN

(11) **EP 0 889 564 B1**
(45) Date de publication et mention de la délivrance du brevet: **02.01.2002**
(21) Numéro de dépôt: 98401594.1
(22) Date de dépôt: 26.06.1998
(51) Int. Cl.: H02B 1/044

(54) **Dispositif de commande ou de signalisation électrique.**
Elektrisches Befehls- oder Meldegerät
Electric control or signal device

(30) Priorité: 01.07.1997 FR 9708472
(43) Date de publication de la demande: 07.01.1999
(73) Titulaire: Schneider Electric Industries SA, 92500 Rueil-Malmaison (FR)
(72) Inventeur: Bardy, Eric, 16760 Linars (FR)

(56) Documents cités:
- EP-A- 0 452 462
- EP-A- 0 460 729
- DE-A- 2 609 473
- DE-B- 1 114 880
- FR-A- 2 735 274

## Description

La présente invention concerne un dispositif de commande ou de signalisation électrique tel qu'un bouton-poussoir, voyant ou organe analogue constitué par un corps tubulaire pouvant être engagé dans un orifice de paroi et pouvant s'apparier, à l'aide de moyens de verrouillage, à une embase destinée à recevoir au moins un bloc électrique et comportant des moyens de fixation agissant sur la face interne de la paroi.

Les moyens de fixation précités peuvent être constitués par un écrou vissé sur un filetage du corps tubulaire du dispositif.

D'autres moyens de fixation sont constitués par une embase qui s'assemble au corps tubulaire et porte des blocs de contact. Cette embase porte des moyens d'accrochage tels que des vis pointeau ou des bras d'accrochage pivotants manoeuvrés au moyen d'une vis. De tels moyens sont décrits dans le brevet EP 452 462 ou le brevet WO 91/07790.

L'invention a pour but de fournir une fixation procurant un effort de serrage qui s'exerce dans l'axe de symétrie du dispositif, ce qui procure une bonne étanchéité de la face avant. Cette fixation procure un effort de placage important ainsi qu'un accrochage amélioré s'opposant à la rotation.

Selon l'invention, l'embase s'emboîte sur le corps tubulaire auquel elle s'assemble par un verrou coulissant et les moyens de fixation sont constitués par une bride pivotante pourvue de deux branches d'ancrage montées par des articulations sur l'embase de manière que leurs extrémités libres encadrent la partie manoeuvrable du verrou, cette bride portant une vis de serrage.

Selon une caractéristique, la bride a une forme générale en U.

Selon une autre caractéristique, la vis de serrage se visse dans une plaquette-écrou montée pivotante sur la bride et elle associée à des moyens limitant ses débattements en rotation.

L'invention va maintenant être décrite en référant à des modes de réalisation donnés à titre d'exemples et représentés par les dessins annexés sur lesquels:
- la figure 1 est une vue en perpective éclatée d'un bouton-poussoir selon l'invention;
- la figure 2 est une vue en coupe axiale du bouton-poussoir de la figure 1;
- la figure 3 une vue en élévation du bouton-poussoir des figures 1 et 2;
- la figure 4 est une vue en perspective du bouton-poussoir des figures 1 à 3;
- la figure 5 est une vue en perspective éclatée d'une variante de la figure 1.

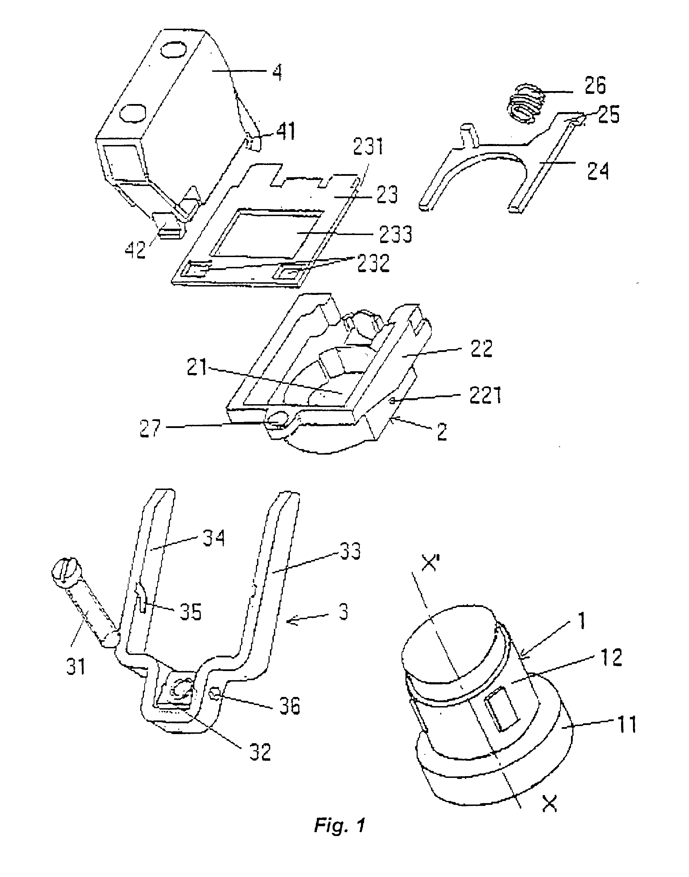

L'appareil de commande ou de signalisation électrique illustré sur les figures 1 à 5 est un bouton-poussoir comportant un corps 1 constitué d'une tête 11 et d'une partie tubulaire 12 de forme générale cylindrique, d'axe XX' et de diamètre inférieur à la largeur de la tête. L'appareil est monté sur une paroi mince de support 13 de manière que la tête soit posée, avec éventuellement un joint et/ou une étiquette non représentés, sur la face apparente de cette paroi mince de support 13 qui peut faire partie d'une enveloppe (pupitre, armoire, ...). La paroi est percée par un orifice circulaire 131 dans lequel s'engage la partie tubulaire 12 du bouton-poussoir.

La fixation du bouton-poussoir s'effectue à l'aide d'une embase de fixation 2 de forme générale rectangulaire. Cette embase est constituée d'un corps 22 et d'une platine porte-contacts 23 assemblée à ce corps par des moyens connus. Le corps 22 présente un alésage central 21 adapté à recevoir la partie tubulaire 12. La platine porte-contacts 23 est percée d'un alésage central 233 et sert à porter de manière amovible et après verrouillage, des blocs électriques amovibles 4 tels que blocs de contact interrupteurs ou blocs auxiliaires.

L'embase 2 s'emboîte sur la partie tubulaire 12 et s'assemble à celle-ci par un verrou coulissant 24 ayant une forme d'étrier et empêchant l'extraction de l'embase dans la direction axiale. Ce verrou présente, à l'extérieur, un doigt de manoeuvre 25. Il est guidé dans des glissières de l'embase 2 et il est soumis à un ressort de verrouillage 26 qui tend à le déplacer vers l'axe de symétrie X-X'.

L'embase 2 se monte du côté intérieur de la paroi 13. Elle s'ancre contre la face interne de la paroi 13 au moyen d'une bride pivotante 3 qui a la forme d'un étrier en U et qui porte une vis de serrage 31, de type à bout pointu. Cette bride est formée de deux branches d'ancrage 33 et 34 réunies par un pont 37.

Dans le mode de réalisation des figures 1 à 4, la vis de serrage 31 se visse dans une plaquette-écrou 32 qui est montée pivotante entre les branches d'ancrage 33 et 34. La vis 31 est guidée dans un alésage 27 du corps 22. La plaquette-écrou 32 est articulée sur la bride par une articulation 36. Les débattements en rotation de la plaquette-écrou 32 sont limités par des butées ménagées dans l'articulation 36.

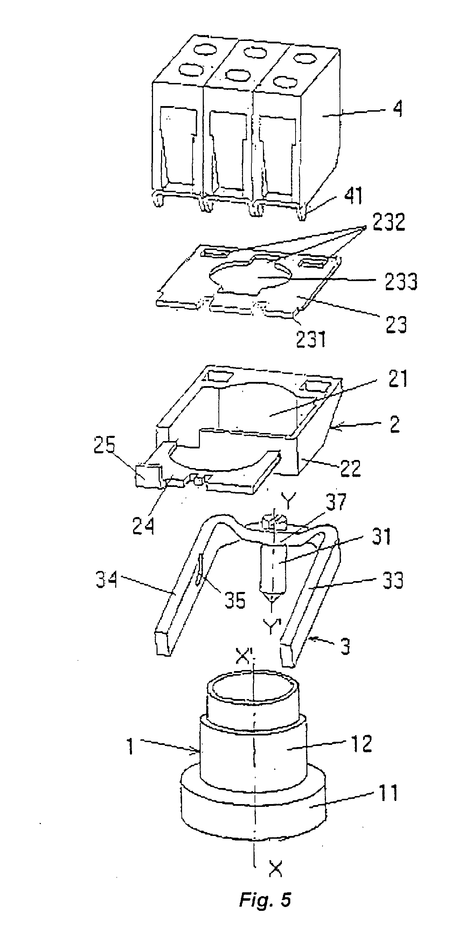

Dans la variante de la figure 5, la vis de serrage 31 se visse dans un trou taraudé qui est ménagé dans le pont 37 solidarisant les deux branches 33, 34 de la bride 3. Ce pont 37 est vrillé de manière que l'axe de symétrie Y-Y' de la vis 31 fasse une angle aigu avec un plan parallèle aux branches d'ancrage 33 et 34.

Les branches latérales de la bride 3 sont montées à l'extérieur de l'embase 2 à laquelle elles sont articulées, par des paliers d'articulation 35 qui sont associés à des tourillons 221 solidaires du corps 22. Ces tourillons 221 sont perpendiculaires et concourants à l'axe de symétrie X-X'. Le verrou coulissant 24 se loge entre les extrémités libres des branches 33, 34 de la bride de manière que l'accès à ce verrou soit facile lors du démontage des blocs 4. Ainsi les appuis, sur la paroi 13, des extrémités libres des branches 33, 34 et de la vis 31 s'effectuent de part et d'autre du plan passant par l'axe X-X' et par les axes 35-221. Du fait que l'articulation 35-221 est centrée, l'effort appliqué au bouton-poussoir s'effectue selon X-X'.

Les blocs de contact 4 se fixent sur la platine porte-contacts 23 qui est de préférence métallique. Les blocs 4 sont munis d'une part de verrous d'accrochage mobiles 41 qui peuvent s'engager dans des gâches 231 de la platine et d'autre part de doigts d'accrochage fixes 42 qui s'accrochent dans des gâches 232 de la platine, ces doigts et verrous 41 et 42 étant situés de part et d'autre d'un plan passant par X-X'.

Le dispositif décrit ci-dessus fonctionne de la manière suivante.

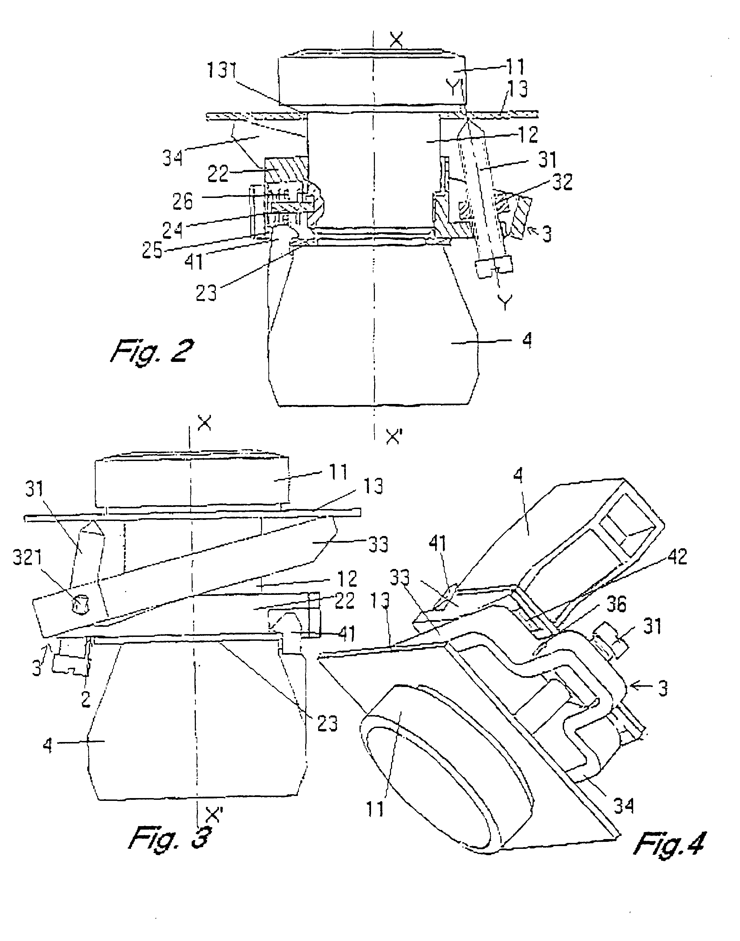

L'installateur engage le corps tubulaire 12 du bouton-poussoir dans l'orifice 131 de la paroi 13, puis engage l'embase 2 sur ce corps tubulaire 12 jusqu'à encliquetage du verrou 24. La bride 3 est alors amenée à la position de serrage illustrée par les figures 2 à 4, par rotation de la vis 31. Au cours de ce mouvement, les extrémités libres des branches 33, 34 de la bride viennent s'appuyer sur la paroi 13, tandis que le bout pointu de la vis 31 vient également s'appuyer sur cette paroi. Ainsi il y a trois points d'accrochage, ce qui procure un bon accrochage s'opposant à la rotation.

## Revendications

1. Dispositif de commande ou de signalisation électrique tel que bouton-poussoir ou voyant constitué par un corps tubulaire (12) pouvant être engagé dans un orifice de paroi (13) et pouvant s'apparier, à l'aide de moyens de verrouillage (24), à une embase (2) destinée à recevoir au moins un bloc électrique (4) et comportant des moyens de fixation (3) agissant sur la face interne de la paroi de support, **caractérisé par le fait que** l'embase (2) s'emboîte sur le corps tubulaire (12) et s'assemble à celui-ci par un verrou coulissant (24) et que les moyens de fixation (3) sont constitués par une bride pivotante (3) pourvue de deux branches d'ancrage (33, 34) montées par des articulations (35-221) sur l'embase de manière que les extrémités libres encadrent la partie manoeuvrable (25) du verrou (24), cette bride portant une vis de serrage (31).

2. Dispositif selon la revendication 1, **caractérisé par le fait que** la bride (3) a une forme générale en U.

3. Dispositif selon l'une quelconque des revendications précédentes, **caractérisé par le fait que** la vis de serrage (31) se visse dans une plaquette-écrou (32) montée pivotante sur la bride et qu'elle est associée à des moyens (27, 22) limitant ses débattements en rotation.

4. Dispositif selon l'une quelconque des revendications précédentes, **caractérisé par le fait que** la vis de serrage (31) est montée de manière que son axe Y-Y' fasse un angle aigu avec un plan parallèle aux branches latérales (33 et 34) du U.

5. Dispositif selon l'une quelconque des revendications précédentes, **caractérisé par le fait que** les branches d'ancrage (33, 34) de la bride (3) sont articulées à l'embase par des axes d'articulation (35-221) qui sont perpendiculaires et concourants avec l'axe de symétrie X-X' du corps tubulaire (1).

6. Dispositif selon l'une quelconque des revendications précédentes, **caractérisé par le fait que** le verrou (24) présente à l'extérieur un doigt de manoeuvre (25) et est guidé dans des glissières de l'embase (2) en étant soumis à un ressort de verrouillage (26) qui tend à le déplacer vers l'axe de symétrie X-X'.

7. Dispositif selon l'une quelconque des revendications précédentes, **caractérisé par le fait que** les blocs de contact (4) sont munis d'une part de verrous d'accrochage mobile (41) et d'autre part de doigts d'accrochage fixes (42) qui s'accrochent à l'embase, ces verrous et doigts (41 et 42) étant situés de part et d'autre d'un plan passant par l'axe de symétrie X-X' du dispositif.

8. Dispositif selon l'une quelconque des revendications précédentes, **caractérisé par le fait que** l'embase (2) est constituée d'un corps (22) et d'une platine (23).

## Patentansprüche

1. Elektrische Steuer- oder Anzeigevorrichtung wie zum Beispiel eine Drucktaste oder Anzeigelampe, bestehend aus einem röhrenförmigen Körper (12), der in eine Wandöffnung (13) eingeführt und mit Hilfe von Verriegelungsmitteln (24) an einen Sockel (2) angebracht werden kann, der dazu bestimmt ist, mindestens einen elektrischen Satz (4) aufzunehmen und Befestigungsmittel enthält (3) enthält, die auf die Innenseite der Trägerwand einwirken, **dadurch gekennzeichnet, daß** der Sockel (2) auf den röhrenförmigen Körper (12) aufgesetzt und mit diesem durch einen Schiebeverschluß (24) verbunden wird und daß die Befestigungsmittel (3) aus einem schwenkbaren Flansch (3) bestehen, ausgestattet mit zwei Verankerungsarmen (33, 34), die so mit Gelenken (35-221) am Sockel angebracht sind, daß die freien Enden den bewegbaren Teil (25) des Verschlusses (24) umrahmen, wobei dieser Flansch eine Klemmschraube (31) enthält.

2. Vorrichtung nach Patentanspruch 1, **dadurch gekennzeichnet, daß** der Flansch (3) im allgemeinen eine U-Form hat.

3. Vorrichtung nach einem der vorstehenden Patentansprüche, **dadurch gekennzeichnet, daß** die Klemmschraube (31) auf eine Mutter-Platte (32) geschraubt wird, welche schwenkbar auf dem Flansch angebracht ist und mit Mitteln (27, 22) verbunden ist, die seine Drehbewegungen beschränken.

4. Vorrichtung nach einem der vorstehenden Patentansprüche, **dadurch gekennzeichnet, daß** die Klemmschraube (31) so angebracht ist, daß ihre Achse Y-Y' einen spitzen Winkel zur parallelen Ebene der Seitenarme (33 und 34) des U bildet.

5. Vorrichtung nach einem der vorstehenden Patentansprüche, **dadurch gekennzeichnet, daß** die Verankerungsarme (33, 34) des Flansches (3) am Sockel durch Gelenksachsen (35-221) beweglich sind, welche senkrecht und mit der Symmetrieachse X-X' des röhrenförmigen Körpers (1) gleichzeitig wirkend sind.

6. Vorrichtung nach einem der vorstehenden Patentansprüche, **dadurch gekennzeichnet, daß** der Verschluß (24) außen einen Betätigungsstift (25) aufweist, der in die Gleitschienen des Sockels (2) geführt wird, wobei er einer Verriegelungsfeder (26) unterliegt, die versucht ihn zur Symmetrieachse X-X' hin zu verschieben.

7. Vorrichtung nach einem der vorstehenden Patentansprüche, **dadurch gekennzeichnet, daß** die Kontaktsätze (4) einerseits mit beweglichen Verankerungsriegeln (41) und andererseits mit festen Verankerungsstiften (42) ausgestattet sind, die auf dem Sockel befestigt werden, wobei sich diese Riegel und Stifte (41 und 42) beiderseits der Ebene befinden, die über die Symmetrieachse X-X' der Vorrichtung geht.

8. Vorrichtung nach einem der vorstehenden Patentansprüche, **dadurch gekennzeichnet, daß** der Sockel (2) aus einem Körper (22) und einer Platte (23) besteht.

## Claims

1. Electrical control or signaling apparatus such as a push-button or indicator lamp consisting of a tubular body (12) which can be engaged in an aperture in a surface (13) and capable of fitting, using locking means (24), to a base (2) designed to receive at least one electrical unit (4) and comprising fastening means (3) acting on the inner side of the surface **characterized by** the fact that the base (2) fits onto the tubular body (12) to which it is fastened by a sliding lock (24) and fastening means (3) consisting of a pivoting yoke (3) with two anchoring forks (33,34) mounted on hinges (35-221) to the base in such a way that their free ends lie on either side of the movable section (25) of the lock (24), said yoke bearing a tightening screw (31).

2. Apparatus of claim 1, **characterized by** the fact that the yoke (3) is more or less U-shaped.

3. Apparatus according to claims 1 or 2, **characterized by** the fact that the tightening screw (31) screws into a hinge-mounted nut plate (32) on the yoke and it is associated with means (27, 22) that limit its rotation clearance.

4. Apparatus according to claims 1 or 2, **characterized by** the fact that the tightening screw (31) is mounted in such a way that its axes Y-Y' forms an acute angle with a plane parallel to the lateral forks (33 and 34) of the U.

5. Apparatus according to claims 1 or 2, **characterized by** the fact that the anchoring forks (33 and 34) of the yoke (3) are hinged to the base by hinged axles (35-221) which are perpendicular and concurrent to the axis of symmetry X-X' of the tubular body (1).

6. Apparatus according to claims 1 or 2, **characterized by** the fact that the lock (24) has an operating finger (25) on the outside and it is inserted into the sliders of the base (2) where it is subject to a spring lock (26) that tends to move it in the axis of symmetry X-X'.

7. Apparatus according to claims 1 or 2, **characterized by** the fact that the contact units (4) are provided with movable hooking locks (41) and fixed hooking fingers (42) which hook into the base, the fingers and the locks (41) and (42) being positioned on either side of a plane running through X-X' of the apparatus.

8. Apparatus according to claims 1 or 2, **characterized by** the fact that the base (2) comprises a body (22) and a plate (23).
